# EUROPEAN PATENT APPLICATION

(11) **EP 1 995 965 A1**
(43) Date of publication of application: **26.11.2008**
(21) Application number: 08151241.0
(22) Date of filing: 08.02.2008
(51) Int. Cl.: H04N 7/167, H04N 7/26

(54) **Method and apparatus for video frame marking**

(30) Priority: 24.05.2007 US 807045
(71) Applicant: Apple Inc., Cupertino, CA 95014 (US)
(72) Inventor: Lerouge, Julien, Santa Clara, CA 95054 (US); Farrugia, Augustin J., Cupertino, CA 95014 (US); Riendeau, Jean-Francois, Santa Clara, CA 95051 (US); Fasoli, Gian Paolo, Palo Alto, CA 94301 (US)
(74) Representative: Freeman, Jacqueline Carol

(57) **Abstract**

Method and apparatus for marking individual video frames of an H.264/AVC standard compliant or equivalent digital video stream. Each video frame in a H.264/AVC video stream is conventionally divided into NAL units. There are typically a number ofNAL units for each video frame. There is specified in the H.264/AVC standard the SEI (Supplemental Enhancement Information) type. This type includes the user data unregistered type, which can contain arbitrary data. In the present method and apparatus, an NAL unit of this type is provided at the beginning of each video frame, preceding the other NAL units associated with that video frame. The data contained in that special SEI unit is typically control information for downstream control of use of the video content. Examples of the type of control information are stream positioning data such as a video frame number; stream bit rate, such as normal, fast forward; decryption data, such as a decryption key or key derivation seed; and validation elements, such as a checksum or hash function value or signature.

## Description

### FIELD OF THE INVENTION

This invention pertains to video, generally, and more specifically to transmission and distribution of digital video.

### BACKGROUND

Transmission and storage of video in digital form is well known. This is typically used in the computer field and the Internet, and other uses of video such as personal video recorders. There is the well known H.264, MPEG-4 Part 10 standard also called AVC (Advanced Video Coding) which is a digital video coding/decoding standard intended to achieve very high rates of data compression. It was created by the ITU-T Video Coding Experts Group together with the Moving Picture Experts Group (MPEG). There is a companion H.263 standard, which is similar in many respects. The H.264 standard and the MPEG-4 Part 10 standard are jointly maintained to have identical technical content. This standard is often referred to as H.264/AVC. The intent of H.264/AVC (hereinafter "H.264") is to create a standard capable of providing good video quality at substantially lower bit rates than previous standards. This is achieved by relatively high rates of data compression. The standard is intended for a variety of applications for both high and low bit rates, high and low video resolutions and effective for use on a variety of computer networks and systems, for instance, for broadcast video, DVD storage, packet networks and multimedia telephony systems.

This standard is intended to compress video more effectively than previous standards. This standard is well known so further detail is generally not supplied here, except to the extent relevant to this disclosure. Specifically, this disclosure generally does not discuss in detail the well known compression aspects of this standard.

One aspect of this standard in addition to compression is provision of supplemental enhancement information (SEI) which is extra information that can be inserted into the video bit stream to enhance the use of the video for a wide variety of purposes.

More generally in accordance with H.264, the video bit stream is divided into NAL (Network Abstraction Layer) units. Each video frame consists of a number of NAL units. Each NAL unit has a given type. One type is used to mark an end of a stream; another type is used to mark an end of a sequence, etc. The type of interest most relevant here is the above-mentioned SEI type (Supplemental Enhancement Information). This type is typically used for post processing purposes such as applying a filter to a frame. It is not mandatory to have the SEI information in order to decode the video stream. That is, an H.264 video decoder may ignore the SEI NAL units and still decode the content of the video stream.

Moreover, the SEI NAL units per the standard have an internal type. For example, one type of SEI NAL unit is used to specify buffering, and another to specify pan-scan parameters. A type of interest here is the user data registered type, which contains user data registered as specified by the ITU-T recommendation T.35. Even of more interest is the user data unregistered type. This is a message, which contains unregistered user data identified by a UUID, the contents of which are not specified by the standard (UUID is Universal Unique Identifier). This is identified in the ISO/IEC 14496-10 standard Annex D, Part D.2.6. In general the NAL (Network Abstraction Layer) is specified to format the data and provide header information in a manner appropriate for conveyance on a variety of communication channels or storage media. All of the video data in the video stream is contained in NAL units, each of which contains an integer number of bytes. An NAL unit specifies a generic format for use in both packet-oriented and byte stream systems. The format of NAL units for both packet-oriented transport and byte stream is identical, except that each NAL unit can be preceded by a start code prefix and extra padding bytes in the byte stream format.

### SUMMARY

In accordance with this disclosure, the above described SEI NAL units of the user data unregistered type are provided so that there is one such NAL unit at the beginning or near the beginning of the group of NAL units associated with each video frame in the video stream. As well known, video typically is organized in frames where a frame is effectively an image. For interlaced video, there are two fields per frame. For progressive scan video there is one field per frame. Typically video is displayed at 30 frames per second.

In accordance with this disclosure therefore an NAL unit is formed for each video frame. This frame is provided by the encoding apparatus, which encodes the H.264 video, and the NAL unit is at or near the beginning of each group of NAL units identified with each particular frame. Since generally this type of NAL unit data is ignored by a standard decoder, one can use this NAL unit (as intended) for user data. In accordance with this disclosure, not only is this type of NAL unit provided at or near the beginning of each group of NAL units for each frame, also it holds information that relates to control of the video. Thus, this uses the SEI data as a container to arbitrarily store "in band" data. This SEI data can be used for a variety of purposes and typically is encoded in a proprietary format, since there is no standardized format for unregistered user data in H.264. One use of this data is for stream positioning data to indicate for instance the number of the current frame. Another use is to indicate the stream bit rate; that is, the current bit rate for the video frame. Another use is to provide decryption information, for instance, a decryption key or a seed for derivation of a decryption key where typically the video stream is encrypted. Another use is validation purposes. For instance, the SEI data may be information used to validate the frame such as a checksum or HMAC (hash value). These particular exemplary uses are not limiting.

Note also that the newly created SEI NAL unit may itself be encrypted and/or signed (validated) so that information contained in it is not easily accessible to an unauthorized user. Thus, the information can be used generally for security purposes to ensure that the video content is not misused.

### BRIEF DESCRIPTION OF THE DRAWINGS

Fig. 1 shows in accordance with this disclosure a video stream organized by frame and NAL unit with the special added NAL unit.

Fig. 2 shows in accordance with this disclosure a decryption and decoding process for video.

Fig. 3 shows a prior art H.264 encoder in block diagram form.

Fig. 4 shows an encoding apparatus in accordance with this disclosure in block diagram form.

Fig. 5 shows a decoding apparatus in accordance with this disclosure in block diagram form.

### DETAILED DESCRIPTION

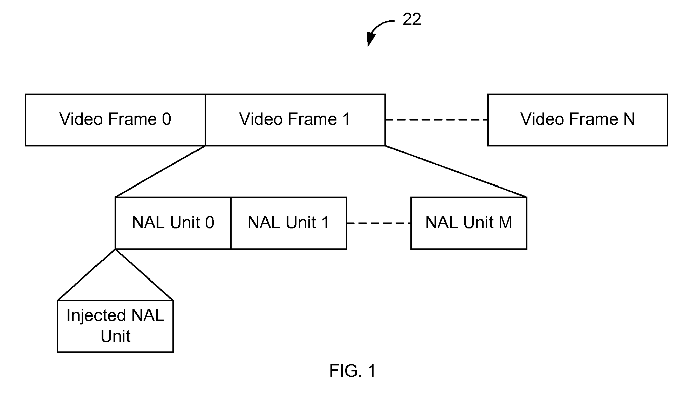

Fig. 1 shows in graphical form the structure of a video data stream 22 encoded and organized in accordance with this disclosure. Note that H.264/AVC supports the coding of video for either progressive scan or interlaced scan frames, which even may be mixed together in the same sequence. As well known, a frame of video contains two interlaced fields-the top and the bottom field. The two fields of an interlaced frame, which are separated in time, may be coded separately as two field pictures or together as a frame picture. A progressive frame is normally always coded as a single frame picture, however, it is still considered to consist of two frame fields existing at the same instant in time. As specified above, the present method is directed to marking or indicating data in individual video frames of an H.264 video data stream. Each video frame in an H.264 video stream, as indicated above, is known to be divided into NAL units, see Fig. 1. In Fig. 1 the first row indicates the various video frames indicated by number. These are conventional video frames, without reference even to H.264. In accordance with the H.264/AVC standard, each video frame is encoded into a particular number of NAL units where here for video frame 1 these are Units 0 through M. The number M is dependent upon various factors as specified in the H.264/AVC standard. As specified above and as well known, each NAL unit has a given type. A defined type is a SEI (Supplemental Enhancement Information) type. In accordance with this disclosure as indicated in the last row of Fig. 1, a particular type of SEI unit is provided at the beginning or near the beginning of each video frame. This is labeled as injected NAL unit here. This SEI NAL unit is of the user data unregistered type as specified in the standard. Thus, this data can be any information which is subject to be used for control or other purposes upon receipt of the video shown in Fig. 1.

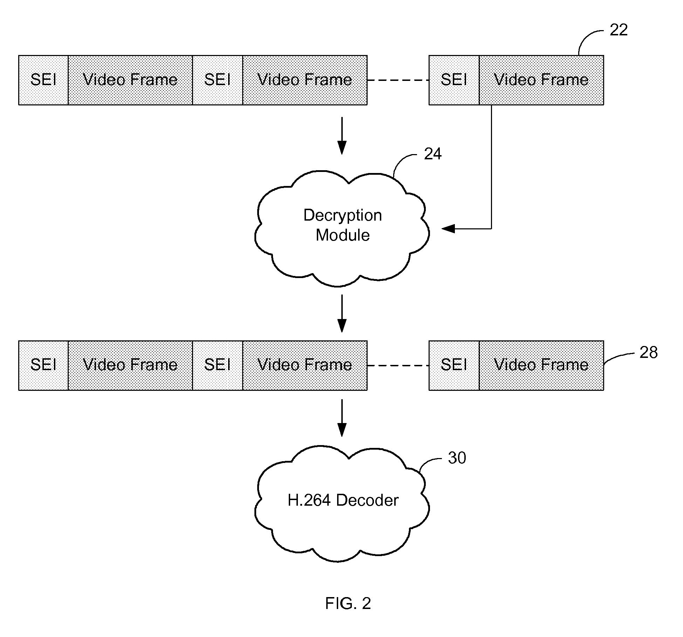

Fig. 2 shows use of this type of special NAL unit. In Fig. 2 the top row shows the video stream 22 of Fig. 1 including at the beginning of each video frame an SEI unit which is the injected SEI NAL unit of Fig. 1. This video is provided to a conventional decryption module 24 which may be a hardware unit or software (computer program) type decryption. Each video frame is conventionally decrypted according to its various NAL units, unit by unit, by decryption module 24 which may use any conventional decryption technique. (Of course, this assumes that the video stream 22 was earlier encrypted.) Then in the middle portion of Fig. 2 the decrypted video stream 28 is again in the form ofNAL units, each video frame being preceded by a decrypted SEI NAL unit. Each of these strings of NAL units 28 is provided to a conventional H.264 decoder 30. Decoder 30 outputs the video in decoded (decompressed) format, for viewing or other use.

Thus, Fig. 2 illustrates a data path for use of the special NAL units provided in accordance with this disclosure. In accordance with this disclosure in one embodiment the decryption module 24 may use the information in the special SEI NAL units to decrypt the video data, enforce a playback policy, or as a source of other type of control information. As noted above necessarily the information is encoded in some type of proprietary format in these special SEI units since the H.264 standard itself specifies no such format. (Note the distinction between encoding and encrypting.) Of course, this format need not be secret. It may be shared with others, or it may be retained as secret for security reasons.

Examples of the type of information to be put in the special SEI NAL units are the following. First, this may be stream positioning data. By providing the current video frame number in the special SEI unit, where the frame number is a video frame number O to N as shown in Fig. 1, the decryption module 24 (or any other processing element, hardware or software) may be made aware of the current position of the video frame being processed in the video stream. This may cause the triggering of other events accordingly. For instance, if it is detected that there are repeated "seeks" in the video stream this may indicate backward playback or missing video frames. In other words, this would be an indicator of some sort of unusual playback condition.

Another use of the data in the special SEI NAL unit is to indicate a stream bit rate. Thus, by providing in the special NAL unit the current bit rate for each particular video frame, decryption module 24 can be made aware of the current necessary decoding speed. For instance, this might indicate normal playback, fast forward, etc. Another use of this data is to provide decryption related information. In this case, the special SEI NAL unit includes information related to the decryption to be carried out by decryption module 24. For instance, the data may be a seed for a proprietary key derivation algorithm. Without the proper algorithm and seed of course the video frame cannot be decrypted. One could also enforce a rule in the decryption logic in decryption module 24 that a video frame may not be decrypted unless some video frame prior to it, itself containing the necessary decryption information, has itself already been successfully decoded.

Another use of the special SEI unit is for validation purposes. That means to validate the video data content of each video frame. In this case, the special SEI NAL unit may contain data used to validate each particular associated video frame. For instance, this might be a checksum or hash function value or HMAC value or signature used for validating each video frame, frame by frame.

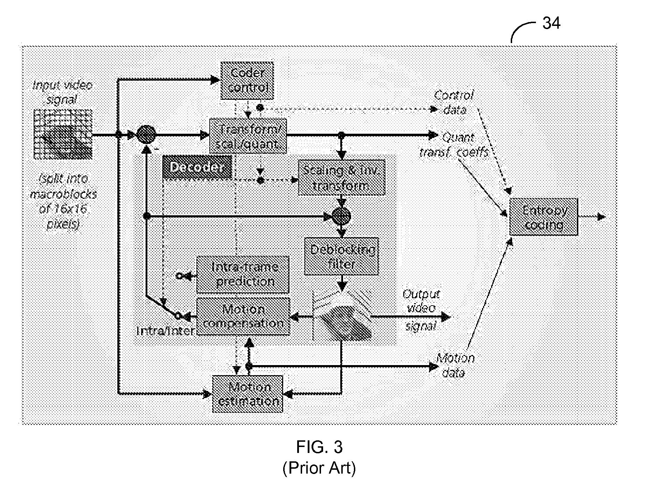

The actual video coding aspect of H.264/AVC is similar to other standards and consists of a hybrid of temporal and spatial prediction in conjunction with transform coding, all for compression purposes. Fig. 3 shows a prior art video coding operation as carried out by a typical H.264/AVC encoder. In Fig. 3, the input video signal is split into blocks. Each sample of a block in an "Intra" frame is predicted using samples of previously coded blocks.

For the remaining pictures of a sequence, "Inter" frame coding is used. This uses prediction (motion compensation) which chooses motion data. The motion data are used by the encoder and decoder of Fig. 3. The residual of the prediction is transformed. The transform coefficients are scaled and quantized, then entropy coded and transmitted. The encoder includes the decoder block for the predictions. The quantized transform coefficients are inverse scaled and inverse transformed, giving the decoded prediction residual which is added to the prediction. The result is coupled to the deblocking filter to output the decoded video. Such encoders (and the complementary decoders) are commercially available.

As easily well understood by one of ordinary skill in the art, the decryption and decoding process of Fig. 2 thereby has a complementary encoding and encryption process. Note that there is no requirement for the decryption/encryption aspect; that is an additional feature added here in certain embodiments to provide better security. However, use of the special NAL units as explained here does not require encryption or decryption.

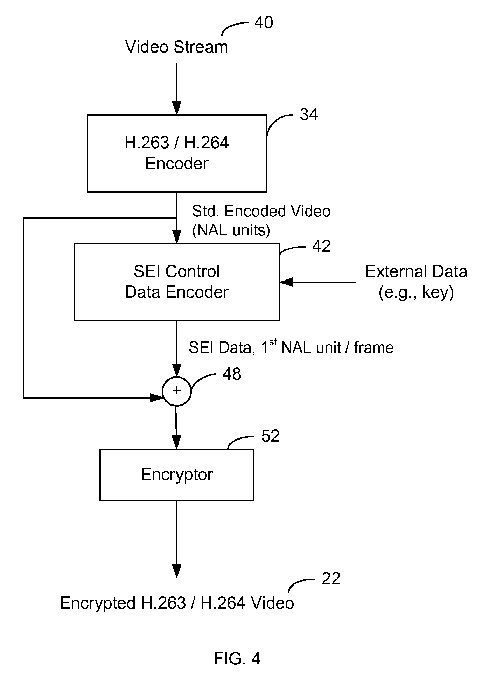

Fig. 4 thus depicts an encoding apparatus used to provide an encrypted and encoded H.264 video stream 22 of the type shown in Fig. 2. Thus, as shown in Fig. 4, one begins with an unencoded, unencrypted, noncompressed video stream 40 in digital form. This is provided to a conventional H.263 or H.264 encoder 34 of the type shown, for instance, in Fig. 3 and well known in the field. This encoder 34 outputs the standard encoded video in the form of the NAL units of the type shown in the second row, for instance, in Fig. 1. Each video frame conventionally has a number of associated NAL units as in Fig. 1. This encoded video is then supplied to an SEI control data encoder 42 provided in accordance with this disclosure. Element 42 is specifically intended to provide the data in the special injected NAL unit shown in the last row in Fig. 1. Element 42 both accepts external data as shown in the right hand portion of Fig. 4 if needed to insert in the special NAL unit or may format the data from the standard encoded video received from encoder 34 in other embodiments, or the data may be a combination thereof. In any case, the SEI control data encoder 42 outputs the SEI data formatted in the first NAL unit for each frame as indicated. This special NAL unit is then injected by combining element 48 into the otherwise standard encoded video stream output from encoder 34 at the proper location. The output of combiner 48 may then be further transmitted or stored or, as shown in the Fig. 4 embodiment, the encoded video stream is provided to a conventional encryptor 52 which encrypts the entire video stream, including the special SEI NAL units and the remaining NAL units, and outputs an encrypted H.263/H.264 video stream 22 as in Fig. 1.

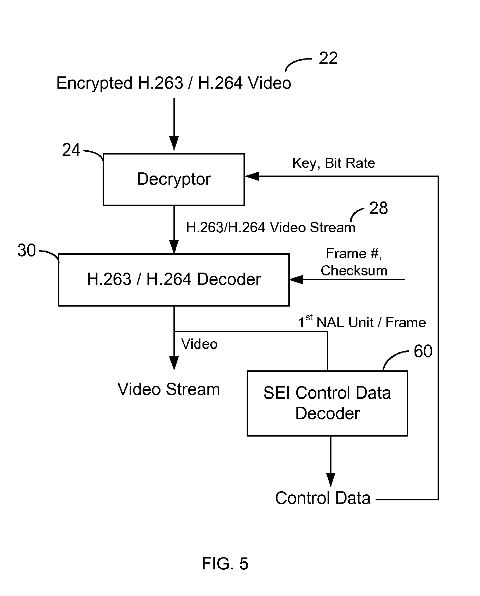

Fig. 5 shows the complementary decoder apparatus which carries out the operation shown in Fig. 2. As shown, the input data is the encrypted H.264/H.264 video 22 of the type output by the Fig. 4 apparatus. This is then supplied to the decryptor 24, as in Fig. 2, which, of course, may be a software or hardware or combined decryptor. (This is referred to as a decryption module in 24 indicating it is often carried out in software.) Decryptor 24 of course needs to receive a decryption key, and may receive a bit rate as indicated above in accordance with this disclosure. As shown here, this key and bit rate information are provided by the apparatus of Fig. 5 itself from the video stream, but they may be provided otherwise. The output of the decryptor 24 is a decrypted H.263/H.264 video stream 28 which is then supplied to a conventional decoder 30 (see also Fig. 2) which is an H.263/H.264 compliant decoder and which is commercially available in the form of an integrated circuit. Of course, this decoder 30 (like encoder 34) may take other forms including combinations of hardware and software and firmware or may be carried out by a processor carrying out the relevant software. The output of decoder 30 is the decoded (decompressed) and decrypted video stream which may be used normally. This is conventional. However, additionally, this video stream is provided to the SEI control data decoder 60 which is a special element provided in accordance with this disclosure for dealing with the special unregistered type data injected in the first NAL unit associated with each video frame as shown in Fig. 1. This decoding element 60 outputs the control data which it easily locates in the special NAL unit. The control data may be used for any purpose. As shown here, it includes for instance a frame number and checksum which is provided back to the decoder 30 as described above and/or the key and bit rate provided to the decryptor 24. Of course it may not be possible or desirable in some embodiments to provide all this information in each special SEI NAL unit. However, the selection of which types of data to use and how they are used is within the discretion of the user of the present system.

Construction or coding of element 42 in Fig. 4 and element 60 in Fig. 5, in hardware or software or a combination thereof, is readily accomplished by one of ordinary skill in the art in light of this disclosure.

This disclosure is illustrative and not limiting; further embodiments will apparent to one skilled in the art in light of this disclosure and are intended to fall within the scope of the appended claims.

## Claims

1. A method of encoding video data, comprising the acts of:
providing a plurality of video frames;
encoding the video according to the H.264 or H.263 standard, the encoded video thereby including a plurality of network abstraction layer (NAL) units for each encoded frame;
wherein one of the NAL units associated with each frame carries supplemental enhancement information of an unregistered data type and is at or near the beginning of the NAL units associated with each frame;
and wherein the NAL unit carrying the information of the unregistered data type carries data relating to control of the video data.

2. The method of Claim 1, wherein the data relates to a key for decryption of the video data and further comprising the act of encrypting the video data using the data relating to a key.

3. A method of decoding video data, comprising the acts of:
receiving encoded video data;
the encoded video including a plurality of network abstraction layer (NAL) units according to the H.264 or H.263 standard for each encoded frame of the video data;
decoding the NAL units, wherein one of the NAL units associated with each video frame carries supplemental enhancement information of an unregistered data type and is at or near a beginning of the NAL units associated with each frame; and
decoding the NAL unit carrying the information of the unregistered data type to determine data relating the control of the video data.

4. The method of Claim 3, wherein the data relates to a key for decryption of the video data and further comprising the act of decrypting the video data using the data relating to a key.

5. A video encoder apparatus comprising:
an input port adapted to receive a plurality of video data frames;
an H.263 or H-263 standard compliant encoder coupled to the input port and outputted the video frames encoded according to the standard, thereby including a plurality of network abstraction layer (NAL) units for each encoded video frame;
an encoding element coupled to receive the NAL units and adapted to form an NAL unit associated with each frame and which carries supplemental enhancement information of an unregistered data type, relating to control of the video data; and
a combining element coupled to receive the NAL unit carrying the supplemental enhancement information and insert that NAL unit at or near the beginning of the NAL units associated with that video frame.

6. The apparatus of Claim 5, wherein the encoding element has a second port to receive the control data pertaining to the control of the video data, and the encoding element encodes the control data into the NAL unit carrying the supplemental enhancement information.

7. The apparatus of Claim 6, further comprising an encryptor coupled to the combining element.

8. The apparatus of any one of Claims 5 to 7, wherein the information of unregistered data type is encoded in a non-standard format.

9. The apparatus of any one of Claims 5 to 7, wherein the information of unregistered data type is a sequence number of the video frame.

10. The apparatus of any one of Claims 5 to 7, wherein the information of unregistered data type is an indicator of a stream bit rate of the video data.

11. The apparatus of Claim 10, wherein the information of unregistered data type indicates one of normal playback speed, fast forward speed, or reverse speed.

12. The apparatus of any one of Claims 5 to 7, wherein the information of unregistered data type relates to a key for decryption of the video data.

13. The apparatus of any one of Claims 5 to 7, wherein the information of unregistered data type is a seed for derivation of the key for decryption.

14. The apparatus of any one of Claims 5 to 7, wherein the information of unregistered data type is for validating the video frame.

15. The apparatus of Claim 14, wherein the information of unregistered data type is a hash value or checksum.

16. The apparatus of Claim 7, further comprising encrypting the video data using the information of unregistered data type relating to a key.

17. The apparatus of Claim 5, wherein the information of unregistered data type is encrypted.

18. The apparatus of Claim 5, wherein the information of unregistered data type includes a verification element.

19. A video decoder apparatus, comprising:
an input port adapted to receive encoded video data, the encoded video data including a plurality of network abstraction layer (NAL) units according to the H.263 or H.264 standard for each encoded frame of the video data;
an H.263 or H.263 standard compliant decoder coupled to the input port and outputting the video frames, wherein one of the NAL units associated with each video fame carries supplemental enhancement information of an unregistered data type and is at or near or beginning of the NAL units associated with each frame;
a decoding element coupled to receive the NAL unit carrying the information of the unregistered data type and decoding it to determine data relating to control of the video data.

20. The apparatus of Claim 19, further comprising a decryptor coupled between the input port and the decoder.

21. The apparatus of Claim 19, wherein the data is provided to the decoder.

22. The apparatus of Claim 20, wherein the data is coupled to the decryptor.

23. The method of any one of Claims 1 to 4, or the apparatus of Claim 19, wherein the data is encoded in a non-standard format.

24. The method of any one of Claims 1 to 4, or the apparatus of Claim 19, wherein the data is a sequence number of the video frame.

25. The apparatus of Claim 19, wherein the data is an indicator of a stream bit rate of the video data.

26. The method or the apparatus of Claim 25, wherein the data indicates one of normal playback speed, fast forward speed, or reverse speed.

27. The method of any one of Claims 1 to 4, or the apparatus of Claim 19, wherein the data relates to a key for decryption of the video data.

28. The method or the apparatus of Claim 27, wherein the data is a seed for derivation of the key for decryption.

29. The method of any one of Claims 1 to 4, or the apparatus of Claim 19, wherein the data is for validating the video frame.

30. The method of any one of Claims 1 to 4, or the apparatus of Claim 29, wherein the data is a hash value or checksum.

31. The apparatus of Claim 20, further comprising encrypting the video data using the data, which relates to a key.

32. The method of any one of Claims 1 to 4, or the apparatus of Claim 19, wherein the data is encrypted.

33. The method of any one of Claims 1 to 4, or the apparatus of Claim 19, wherein the data includes a verification element.
